# EUROPÄISCHE PATENTSCHRIFT

(11) **EP 2 220 589 B1**
(45) Veröffentlichungstag und Bekanntmachung des Hinweises auf die Patenterteilung: **07.01.2015**
(21) Anmeldenummer: 08861518.2
(22) Anmeldetag: 29.11.2008
(51) Int. Cl.: G06K 9/00, B60R 1/00, B60Q 1/14

(54) **KLASSIFIKATION DER FAHRZEUGUMGEBUNG**
CLASSIFICATION OF THE VEHICLE ENVIRONMENT
CLASSIFICATION DE L'ENVIRONNEMENT D'UN VÉHICULE

(30) Priorität: 18.12.2007 DE 102007061658
(43) Veröffentlichungstag der Anmeldung: 25.08.2010
(73) Patentinhaber: ADC Automotive Distance Control Systems GmbH, 88131 Lindau (DE)
(72) Erfinder: ULBRICHT, Dirk, 88239 Wangen (DE)
(86) Internationale Anmeldenummer: PCT/DE2008/001999
(87) Internationale Veröffentlichungsnummer: WO 2009/076929

(56) Entgegenhaltungen:
- EP-A- 1 708 125
- JP-A- 60 240 545

## Beschreibung

Die Erfindung betrifft ein Kraftfahrzeug mit einem Kamerasystem und einem Verfahren zur vorausschauenden Klassifizierung einer zukünftigen Fahrzeugumgebung. Ein solches Verfahren kann z. B. zur Tunnelerkennung in Kraftfahrzeugen mit automatischer Lichtsteuerung und / oder automatischer Fenstersteuerung / Schiebedachsteuerung genutzt werden. Wird ein Tunnel erkannt würde das Licht eingeschaltet und ein evt. geöffnetes Fenster geschlossen. Das rechtzeitige Schließen eines Fensters kann nur bei einer vorausschauenden Klassifizierung der Fahrzeugumgebung umgesetzt werden. Da das angegebene Verfahren für ein vorausschauendes Kamerasystem ausgelegt ist, kann es problemlos von einer herkömmlichen Kamera zur Fahrspurerkennung, Verkehrszeichenerkennung, und zur Erkennung anderer Verkehrsteilnehmer (Fahrzeuge, Fußgänger) etc. zusätzlich ausgeführt werden.

Das Dokument DE 10 2006 001 261 A1 zeigt eine Tunnelerkennungsvorrichtung und eine Lichtsteuervorrichtung für ein Fahrzeug mit einer Bildaufnahmeeinheit zur Aufnahme von Bildern in einem vorderhalb liegenden Bereich.

Die gattungsgemäße EP 1708125 A1 zeigt ein Verfahren zum antizipierten Erkennen der Ankunft eines Kraftfahrzeugs in einem dunklen Bereich mittels einer Kamera. Um ein bevorstehendes Erreichen des dunklen Bereichs durch das Fahrzeug zu bestimmen, wird wenigstens ein dunkles Objekt auf einem ersten von der Kamera gelieferten Bild identifiziert, das dem dunklen Bereich entsprechen kann, und die Veränderung jedes identifizierten dunklen Objekts wird auf den nachfolgenden von der Kamera gelieferten Bildern analysiert. Vor dem Durchfahren eines dunklen Bereichs wird das Einschalten der Scheinwerfervorrichtung des Kraftfahrzeugs veranlasst.

Aufgabe der hier vorliegenden Erfindung ist es, ein Verfahren für ein Fahrzeug anzugeben, mit dem vorausschauend eine zukünftige Fahrzeugumgebung zuverlässig erkannt wird.

Diese Aufgabe ist erfindungsgemäß gelöst durch ein Verfahren und ein Kraftfahrzeug mit Kamerasystem gemäß den unabhängigen Patentansprüchen. Vorteilhafte Weiterbildungen sind den Unteransprüchen zu entnehmen.

Es wird ein Verfahren für ein Kraftfahrzeug mit Kamerasystem zur vorausschauenden Klassifizierung einer zukünftigen Fahrzeugumgebung gemäß Anspruch 1 angegeben. Das Kamerasystem ist auf einen Bereich vor dem Fahrzeug ausgerichtet und nimmt eine Bilderfolge auf. Für die Verarbeitung der Bilddaten ist eine Prozessoreinheit und für das Speichern von Bilddaten ist eine Speichereinheit vorgesehen. Im Bild ist ein erster Bildausschnitt vorgegeben. In diesem Bildausschnitt wird die Helligkeitsänderung pro Zeit- und/oder Wegeinheit bestimmt und daraus wird auf die Umgebung vor dem Fahrzeug geschlossen. Der erste Bildausschnitt ist im mittleren Bildbereich angeordnet.

Ein Kamerasystem für eine Fahrerassistenzfunktion ist i. d. R. auf eine Umgebung mittig vor dem Fahrzeug ausgerichtet, um den Fahrspurverlauf optimal zu erfassen. Objekte, die sich in einer großen Entfernung zum Kraftfahrzeug auf der Fahrspur befinden sind i. d. R. damit auch mittig im Bild abgebildet. Die Größe des Objekts im Bild nimmt mit abnehmender Entfernung zu, so dass dunkle Objekte wie z. B. eine dunkle Tunneleinfahrt mit abnehmender Entfernung immer größer in dem ersten Bildausschnitt dargestellt werden und die Helligkeit in diesem Bildausschnitt mit der Zeit abnimmt. Aus der Änderung der Helligkeit, kann also auf die Umgebung vor dem Fahrzeug geschlossen werden.

Erfindungsgemäß wird die Helligkeit im ersten, mittleren Bildausschnitt mit der Helligkeit im gesamten Bild und / oder der Helligkeit in einem zweiten Bildausschnitt verglichen. Insbesondere wird der Quotient von Helligkeit des ersten Bildausschnitts zu Helligkeit des gesamten Bildes und / oder der Quotient von Helligkeit des ersten Bildausschnitts zu Helligkeit des zweiten Bildausschnitts gebildet und ausgewertet.

So wird z. B. die Helligkeit in der Bildmitte mit den Helligkeiten am oberen, rechten und / oder linken Bildrand verglichen, um die bevorstehende Einfahrt in einen Tunnel, eine Galerie, ein Parkhaus, ein Waldstück oder eine Allee zu erkennen. Die Helligkeit am oberen Bildrand wird für die genannten Objekte erst kurz vor der Einfahrt abnehmen. Der zweite Bildausschnitt kann auch der verbleibende Bereich des gesamten Bildes sein, wenn man den ersten Bildausschnitt ausschneidet, also der verbleibende Rahmen um den ersten Bildausschnitt, so dass erster plus zweiter Bildausschnitt das gesamte Bild ergeben.

Vorzugsweise umfasst die Klassifizierung zumindest eine der folgenden Fahrzeugumgebungen Tunnel, Galerie, Garage bzw. Parkhaus, Waldgebiet, Unterführung, Allee.

In einer weiteren positiven Ausgestaltung der Erfindung ist das Kamerasystem derart ausgestaltet, dass Merkmale wie Portale und/oder Einfahrten und/oder Bedienelemente und/oder Schranken durch die Datenverarbeitung aus den Bilddaten erkennbar sind. Diese Information(en) werden zur Klassifizierung genutzt.

Verfahren zur Erkennung von Objekten sind z.B. Mustererkennung, Verwertung der Farbinformation, Kantenanalyse, Analyse, ob es sich um ein stehendes oder bewegtes Objekt handelt z. B. mit Hilfe des optischen Flusses. Größe- und Entfernung von Objekten kann auch mit einer monokularen Kamera bei bekannter Einbaulage abgeschätzt werden.

Es wird ein Verfahren beansprucht, das zur vorausschauenden Steuerung zumindest einer Funktionseinheit eines Fahrzeugs dient. Die Steuerung erfolgt in Abhängigkeit von einem Klassifikationsergebnis, das mit einem Verfahren nach einem der vorhergehenden Ansprüche bestimmt wurde. Vorzugsweise ist die Funktionseinheit eine Lichtsteuerung oder eine automatische Fenster- bzw. Schiebedachsteuerung oder eine Umluftsteuerung.

In einem weiteren Ausführungsbeispiel wird ein Verfahren wie zuvor beschrieben in einem Kraftfahrzeug mit Kamerasystem und einer Prozessoreinheit implementiert. Das Kraftfahrzeug umfasst eine Funktionseinheit, die entsprechend der klassifizierten, zukünftigen Fahrzeugumgebung ansteuerbar ist.

Die Erfindung wird im Folgenden anhand von Ausführungsbeispielen näher beschrieben.

In bestimmten Situationen muss der Fahrer immer dieselben Handlungen durchführen. Zu solchen Situationen gehören das Ein- und Ausfahren in bzw. aus Tunneln, Waldgebieten, Galerien, d. h. überdachte Durchfahrten, die z. B. in alpinen Regionen dem Lawinenschutz dienen, Parkhäuser und Tiefgaragen, Alleen, etc. Zur Erkennung & Klassifizierung einer solchen Standardsituation wird im Fahrzeug eine nach vorn gerichtete Kamera verbaut. Anhand der Bilddaten wird eine Klassifikation durchgeführt, wobei zumindest eines der folgenden Objekte als Klassifikationsobjekt vorgesehen ist Tunnel, Galerien, Parkhaus, Tiefgarage, Wald, Unterführung und Allee. In Abhängigkeit vom Klassifikationsergebnis können die im Fahrzeug verbauten Systeme dem Fahrer Standardvorgänge abnehmen.

In einem Ausführungsbeispiel werden aufgrund der erkannten bevorstehenden Einfahrt in einen Tunnel Fenster und Schiebedach geschlossen, die Umluftschaltung wird aktiviert, das Fahrlicht eingeschaltet und ggf. das Fach für die Sonnenbrille geöffnet. In einem zweiten Ausführungsbeispiel zeigt das Klassifikationsergebnis die bevorstehende Einfahrt in ein Waldgebiet an. In diesem Fall wird das Licht eingeschaltet und ggf. das Fach für die Sonnenbrille geöffnet.

Die Klassifikation wird anhand der Bilddaten durchgeführt. Ein Tunnelportal erscheint z.B. tagsüber als dunkler Bereich im Verlauf der Fahrbahn. Ein Tunnelportal wird erkannt, wenn die durchschnittliche Helligkeit in dem entsprechenden Bildausschnitt über die Zeit bzw. über den Weg abnimmt während die durchschnittliche Helligkeit im gesamten Bild oder in einem zweiten Bildausschnitt vorzugsweise rechts oder links oben im Bild zunächst annähernd gleich bleibt.

Da Tunnel meist beleuchtet sind, erscheinen sie nachts als heller Bereich im Bild solange sich das Fahrzeug auf den Tunnel zu bewegt. Im Gegensatz zu Ortschaften sind die Seitenwände des Tunnels ebenfalls beleuchtet und erscheinen hell im Bild und sind somit mit einer Objekterkennung identifizierbar.

In einem weiteren Ausführungsbeispiel wird die Erkennung von Galerieportalen geschildert. Galerieportale können wie Tunnelportale über die sich ändernde Helligkeit im weiteren Verlauf der Straße erkannt werden. Bei Galerien ist mindestens eine der Seitenwände tagsüber so hell wie die Umgebung außerhalb der Galerie.

Eine weitere Ausführungsform der Erfindung umfasst die Klassifizierung von Einfahrten von Parkhäusern und Tiefgaragen. Diese ähneln in ihrem Erscheinungsbild Tunneleinfahrten. Charakteristisch für Parkhäuser und Tiefgaragen ist jedoch, dass das Fahrzeug nur mit geringer Geschwindigkeit fährt und/oder an der Einfahrt Schranken oder Automaten erkannt werden. Trifft zumindest eine dieser Bedingungen zu, wird die Klassifikation Parkhaus bzw. Tiefgarage getroffen. Auch die Aktionen, die der Fahrer bei Einfahrt in ein Parkhaus oder eine Tiefgarage durchfährt, ähneln denen bei der Einfahrt in einen Tunnel mit einer Ausnahme: An der Einfahrt von Parkhäusern und Tiefgaragen befinden sich oft Bedienelemente (Automaten für Parkscheine oder andere Zugangssysteme), die der Fahrer vom Fahrzeuginneren bedienen soll. Das Fenster beim Fahrersitz darf daher nicht geschlossen werden.

Ein weiteres Ausführungsbeispiel behandelt Ein- und Ausfahrten in und aus Waldgebieten. Diese sind tagsüber durch einen schnellen Abfall bzw. Anstieg der durchschnittlichen Bildhelligkeit in einem ersten Bildausschnitt gekennzeichnet. Im Gegensatz zu Tunneln, Galerien, Parkhäusern und Tiefgaragen ist bei der Einfahrt in das Waldgebiet kein Portal erkennbar.

Die Klassifikation Unterführung, nutzt die Eigenschaft, dass eine Unterführung ein kurzer Tunnel ist. Wird also eine Tunneleinfahrt wie bereits oben beschrieben und eine Tunnelausfahrt in einem kurzen Abstand (z.B. 20 bis 50 m, insbesondere 30m) hinter der Tunneleinfahrt erkannt, so lautet die Klassifikation Unterführung". Eine Tunnelausfahrt in kurzem Abstand wird z.B. als heller Fleck insbesondere mit einer Form, die im Wesentlichen der Tunneleinfahrt oder einer typischen Tunnelausfahrt gleicht, erkannt.

Alleen werden durch Bäume und deren Schatten charakterisiert. Aufgrund der sich schnell ändernden Lichtverhältnisse und Baumstrukturen lassen sich Alleen erkennen.

Die erkannten Kategorien werden den entsprechenden Funktionseinheiten im Fahrzeug z.B. via Datenbus zur Verfügung gestellt. Die Systeme verhalten sich entsprechend der Umgebungsklassifikation. Z.B. aktiviert die Klimatisierung die Umluftschaltung in "geschlossenen Umgebungen" wie Tunnel, Parkhaus, Tiefgarage, während das Lichtsystem das Fahrlicht bei dunklen Umgebungen oder Umgebungen mit kritischer Beleuchtung einschaltet (Wald, Tunnel, Galerie, Allee, Parkhaus, Tiefgarage).

## Patentansprüche

1. Verfahren für ein Kraftfahrzeug mit Kamerasystem zur vorausschauenden Klassifizierung einer zukünftigen Fahrzeugumgebung, wobei das Kamerasystem auf einen Bereich vor dem Fahrzeug ausgerichtet ist und eine Bilderfolge aufnimmt, und für die Datenverarbeitung von Bilddaten eine Prozessoreinheit und für das Speichern von Bilddaten ein Speichereinheit vorgesehen ist,
**dadurch gekennzeichnet, dass**
in einem ersten Bildausschnitt, der im mittleren Bildbereich angeordnet ist, die Helligkeitsänderung pro Zeit- und/oder Wegeinheit bestimmt und daraus auf die Umgebung vor dem Fahrzeug geschlossen wird,
und, dass die Helligkeit im ersten Bildausschnitt mit der Helligkeit im gesamten Bild und / oder der Helligkeit in einem zweiten Bildausschnitt verglichen wird.

2. Verfahren nach Anspruch 1, **dadurch gekennzeichnet, dass**
die Klassifizierung zumindest eine der folgenden Fahrzeugumgebungen Tunnel, Galerie, Garage bzw. Parkhaus, Waldgebiet, Unterführung, Allee umfasst.

3. Verfahren nach Anspruch 2, **dadurch gekennzeichnet, dass** Merkmale wie Portale und/oder Einfahrten und/oder Bedienelemente und/oder Schranken durch die Datenverarbeitung aus den Bilddaten erkennbar sind und zur Klassifizierung beitragen.

4. Verfahren zur vorausschauenden Steuerung zumindest einer Funktionseinheit eines Fahrzeugs in Abhängigkeit von dem Klassifikationsergebnis, das mit einem Verfahren nach einem der vorhergehenden Ansprüche bestimmt wurde.

5. Verfahren nach Anspruch 4, **dadurch gekennzeichnet, dass** die Funktionseinheit eine Lichtsteuerung oder eine automatische Fenster- bzw. Schiebedachsteuerung oder eine Umluftsteuerung ist.

6. Kraftfahrzeug mit Kamerasystem und einer Prozessoreinheit, auf der ein Verfahren zur Klassifizierung nach einem der Ansprüche 1-3 hinterlegt ist, und einer Funktionseinheit, die entsprechend der klassifizierten, zukünftigen Fahrzeugumgebung ansteuerbar ist.

## Claims

1. A method for a motor vehicle comprising a camera system for the predictive classification of a future vehicle environment, wherein the camera system is oriented to an area in front of the vehicle and records an image sequence, and a processor unit is provided for data processing of image data, and a memory unit is provided for storing image data, **characterized in that**
in one first image section, which is arranged in the central image area, the change in brightness is determined for each time and/or distance unit, and from this, a conclusion is reached regarding the environment in front of the vehicle,
and **in that** the brightness in the first image section is compared with the brightness in the image as a whole and/or with the brightness in a second image section.

2. The method according to claim 1, **characterized in that** the classification comprises at least one of the following vehicle environments: tunnel, gallery, garage or indoor car park, forest area, underpass, avenue.

3. The method according to claim 2, **characterized in that** features such as portals and/or drive entrances and/or operating elements and/or gates are detectable from the image data through data processing and contribute towards the classification.

4. A method for the predictive control of at least one functional unit of a vehicle in accordance with the classification result which has been determined using a method according to any one of the preceding claims.

5. The method according to claim 4, **characterized in that** the functional unit is a light control, or an automatic window or sunroof control, or an air circulation control.

6. A vehicle comprising a camera system and a processor unit on which a method for classification according to any one of claims 1-3 is stored,
and a functional unit which can be triggered according to the classified future vehicle environment.

## Revendications

1. Procédé pour un véhicule automobile avec système de caméra destiné à la classification anticipative d'un futur environnement du véhicule, le système de caméra étant dirigé vers une zone devant le véhicule et prenant une suite d'images, et une unité de processeur étant prévue pour le traitement de données de données d'images, et une unité de mémoire étant prévue pour le stockage de données d'images,
**caractérisé en ce que**,
dans un premier fragment d'image qui est disposé dans la zone d'image centrale, la variation de luminosité par unité de temps et/ou de parcours est définie, et cela est utilisé pour tirer des conclusions sur l'environnement devant le véhicule,
et **en ce que** la luminosité dans le premier fragment d'image est comparée à la luminosité dans l'ensemble de l'image et/ou à la luminosité dans un deuxième fragment d'image.

2. Procédé selon la revendication 1, **caractérisé en ce que** la classification comprend au moins un des environnements de véhicule suivants : tunnel, galerie, garage ou respectivement parking couvert, zone boisée, passage souterrain, allée.

3. Procédé selon la revendication 2, **caractérisé en ce que** des éléments caractéristiques tels que des portails et/ou des entrées et/ou des éléments de commande et/ou des barrières peuvent être identifiés par le traitement d'images à partir des données d'images et contribuent à la classification.

4. Procédé pour la commande anticipative d'au moins une unité fonctionnelle d'un véhicule en fonction du résultat de la classification qui a été défini avec un procédé selon une des revendications précédentes.

5. Procédé selon la revendication 4, **caractérisé en ce que** l'unité fonctionnelle comprend une commande de lumière ou une commande automatique de fenêtres ou respectivement de toit ouvrant ou une commande de circulation d'air.

6. Véhicule automobile avec système de caméra et une unité de processeur dans laquelle est enregistré un procédé de classification selon une des revendications 1 à 3, et avec une unité fonctionnelle qui peut être pilotée en fonction du futur environnement de véhicule classé.
